# EUROPEAN PATENT SPECIFICATION

(11) **EP 3 126 584 B1**
(45) Date of publication and mention of the grant of the patent: **12.09.2018**
(21) Application number: 15722577.2
(22) Date of filing: 25.03.2015
(51) Int. Cl.: E04B 1/343, E03B 1/04, E03B 3/02, F24F 12/00

(54) **MOBILE HOUSE UTILISING RENEWABLE ENERGY**
MOBILES HAUS MIT NUTZUNG VON ERNEUERBARER ENERGIE
MAISON MOBILE UTILISANT L'ÉNERGIE RENOUVELABLE

(30) Priority: 01.04.2014 HU P1400182
(43) Date of publication of application: 08.02.2017
(73) Proprietor: Noah House Kft., 2080 Pilisjászfalu (HU)
(72) Inventor: BLASKOVICH, Akos, 2080 Pilisjászfalu (HU)
(74) Representative: Kacsuk, Zsófia
(86) International application number: PCT/HU2015/000028
(87) International publication number: WO 2015/150843

(56) References cited:
- WO-A2-2010/089535
- DE-A1- 4 240 577
- US-A- 3 848 367
- US-A1- 2012 110 925

## Description

The present invention relates to a mobile house utilising renewable energy.

In order to ensure sustainable development nowadays environmental consciousness is becoming increasingly important. In the case of residential houses and other buildings for prolonged stay (e.g. office buildings, public buildings, etc.) this is mainly reflected in the utilization of renewable energy and the recycling of waste, including waste heat. In the field of renewable energy one of the most common solution is the use of solar cells placed on the roof in order to ensure at least partial energy supply of the house. The utilization of solar power for heating purposes is also starting to spread. The so called passive houses solve the problem of recovering waste heat. On the one hand, these houses are provided with excellent insulation and on the other hand fresh air for ventilation is introduced into the house through a heat exchanger such that the exiting exhausted warmer air heats the introduced fresh but colder air, whereby the need for heating is substantially reduced or even eliminated. US-A-2012/0110925 discloses a mobile house utilising renewable energy, comprising a shell structure comprising a mountable supporting structure and panels and roof mounted thereon, an electric energy supply system, a potable water supply system, a waste water treatment system, and a heating system utilising renewable energy and carried by the shell structure. As a whole, it can be said that although the currently prevailing houses that utilise renewable energy and passive houses are certainly more environment friendly than the conventional buildings, however even houses employing such alternative technologies have substantial ecological footprints.

It is an object of the present invention to provide a house utilising renewable energy which basically has no ecological footprint. In particular, it is an object to provide a mobile house which, after having been mounted at a first location, can be dismounted, transported and remounted at a subsequent location. It is a further object to ensure that the environment need not be substantially altered (for example by founding, laying sewer pipes, or digging a sump) at any of the installation premises.

These objectives are achieved by a mobile house utilising renewable energy having the features of claim 1.

The mobile house according to the present invention is only in contact with the environment through the ground screws. The electric energy supply system, the potable water supply and waste water treatment system and the ventilation and heating system together render the mobile house equivalent to a house connected to all essential public utility infrastructures, however, the engineering does not require disturbing the environment, in particular the ground (there is no need for potable water network, sewerage network, natural gas pipelines, and even connection to the electricity network is optional), whereby the house has no ecological footprint.

Further advantageous embodiments of the invention are defined in the dependent claims.

Further details of the invention will be explained by way of exemplary embodiments with reference to the figures.
Fig. 1 is a cross sectional side view of a mobile house according to the invention with the ground illustrated.

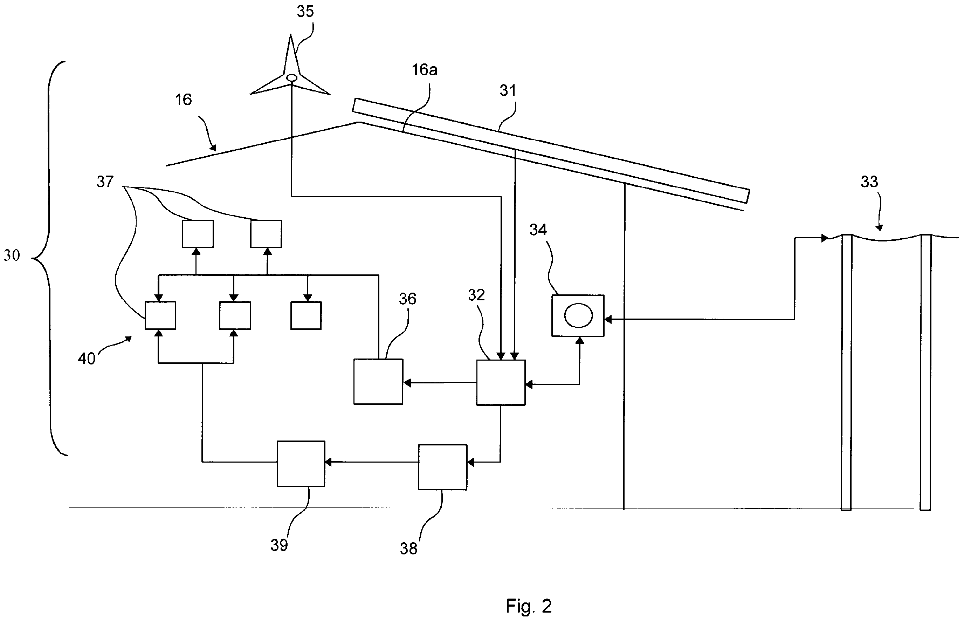

Fig. 2 is a block diagram of an electric energy supply system of the house.
Fig. 3 is a schematic illustration of a potable water supply and waste water treatment system of the house.
Fig. 4 is a block diagram of units of the potable water supply and waste water treatment system that are arranged in the lower engineering space.
Fig. 5 is a schematic top plan view illustrating the water consumption outlets and water discharges at the residential level.
Fig. 6 is a schematic top plan view of units of a ventilation and heating system that are arranged at the residential level.
Fig. 7 is a schematic top plan view of units of the ventilation and heating system that are arranged at the lower engineering level.

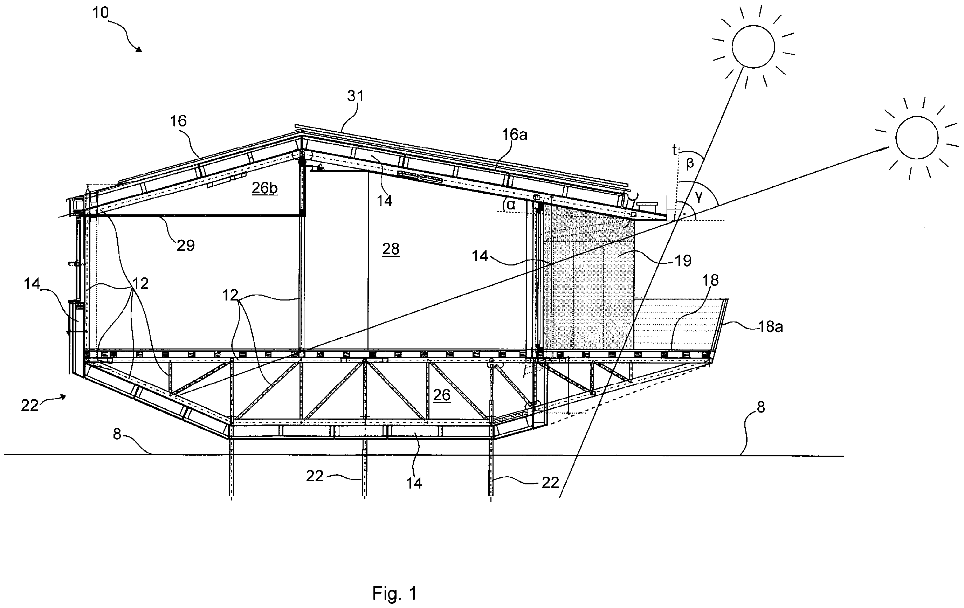

Fig. 1 shows a cross sectional side view of a mobile house 10 according to the invention wherein the ground 8 is also depicted. The mobile house 10 comprises a mountable and dismountable supporting structure 12 of high solidity material (e.g. metal, wood, carbon, etc.), which supports the house's external and internal walls and other boundary surfaces (e.g. the house's 10 bottom, its internal floor, its ceiling, etc.) in the form of panels 14 and roof 16 that are mounted on the supporting structure 12. The supporting structure 12 and the panels 14 can be made of commercially available materials (e.g. wood, cellulose, etc.). A balcony 18 can also be formed on the supporting structure 12, preferably at the south facade panel 14 (which may comprise a door or window) of the house 10, and preferably the balcony 18 is limited by a railing 18a. The roof 16 preferably partly extends over the balcony 18, whereby a portion of (or all of) the balcony 18 can be roofed. The roofed portion of the balcony 18 is preferably separable from the outer environment by mosquito-screens 19 which are preferable slidable in rails, whereby a mosquito and bug free space can be created at the roofed portion of the balcony 18. The roof 16 may also be in the form of roof panels, the components of which are commercially available.

The supporting structure 12, the panels 14 and the roof 16 together define a shell structure 20 which is secured to the ground 8 by ground screws 22. The size of the ground screws 22 as well as their spacing density (i.e. their number per unit ground-space) depends on the size and planned weight of the mobile house 10 as well as the load-bearing capacity of each ground screw 22. The house 10 may be mounted on ground screws 22 of different load-bearing capacity, the arrangement of which can be determined by a person skilled in the art based on static analysis in a known way. Preferably ground screws 22 of a load-bearing capacity of 4 tonnes are used.

The shell structure 20 carries the following systems, which utilise renewable energy: electric energy supply system 30, potable water supply system 50, waste water treatment system 80 and ventilation and heating system 90.

The shell structure 20 comprises an engineering space 26 and a residential space 28 thereover. The present invention does not relate to residential houses exclusively, in the case of non-residential houses the meaning of the term residential space 28 is understood to cover other spaces designed for prolonged human stay, such as office spaces, shop spaces, public spaces, etc.

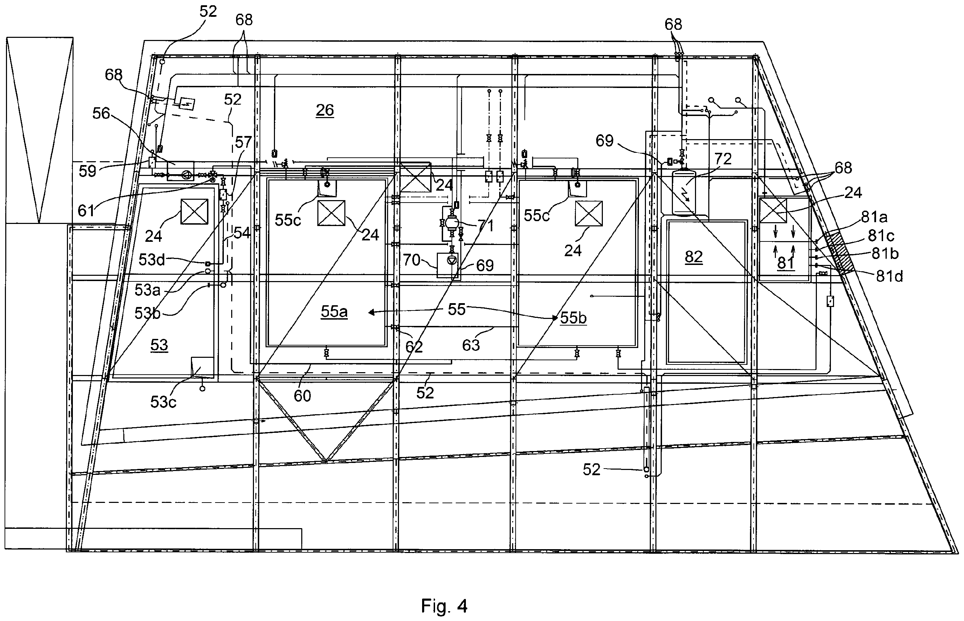

The electric energy supply system 30, the potable water supply system 50, the waste water treatment system 80 and the ventilation and heating system 90 are at least partially installed in the engineering space 26. According to a preferred embodiment an upper engineering space 26b may be separated by a false ceiling 29. Preferably a plurality of access points is provided inside the residential space to descend to the engineering space 26, for example inspection openings 24 depicted in Figs. 4 to 8, which can be opened or closed.

The electric energy supply system 30 comprises a solar cell 31 which is arranged preferably on a south-oriented roof portion 16a of the roof 16. The solar cell 31 can be any type of known photovoltaic cell, for example monocrystalline or polycrystalline type, furthermore the solar cell may comprise a plurality of panels (not depicted) as is well known in the art. The roof portion 16a carrying the solar cell 31 preferably extends beyond the south-oriented facade panel 14 of the mobile house 10, such that the facade panel 14 is protected from direct sunlight when the sun rays' angle of incidence β (i.e. the angle between the sun rays and the vertical) is at its minimum during the year (for example in Hungary on the 21th of June, but preferably throughout summer but at least throughout June and July) and the sunlight strikes the facade panel 14 when the angle of incidence γ with respect to the vertical is at its maximum during the year (for example in Hungary on the 21th of December, but preferably throughout winter but at least throughout December and January) as illustrated in Fig. 1. Preferably, the portion of the roof 16 extending beyond the south-oriented facade panel 14 is dimensioned such that during the later period direct sunlight strikes the facade panel 14 at least up to its half height, more preferably up to at least two thirds of its height. The south-oriented facade panel 14 may comprise a window, balcony door, French-type window extending to the floor or other light permeable solutions.

The roof portion 16a carrying the solar cell 31 is preferable pitched at an angle α corresponding to the angle optimised for all year long operation which is well known in the art and which is, for example, 43° in Hungary.

The electric energy supply system 30 further comprises an inverter 32 connected to the solar cell 31 that is disposed on the roof 16, which inverter 32 converts the DC voltage output of the solar cell 31 into AC voltage. The mobile house 10 according to the invention may function as a local, off-grid (independently operating) electric network as regards electric energy supply, however it can also be connected to the electricity utility grid 33 via a reversible utility energy meter 34. The later measures both the electric energy consumption from the grid and the contribution to the grid and the balance is settled between the consumer and the utility provider (for example in Hungary the ELMU, E-ON, EMASZ, etc.) which is regulated by law in Hungary, but in other countries the billing conditions may be regulated in individual contracts. In the case of off-grid electric energy supply systems 30 it is particularly advantageous to provide additional current generating technologies employing renewable energy, for example by installing a wind generator 35 on the roof 16 which may also be connected to the inverter 32. This is also an option in case of a grid-connected electric energy supply system 30.

The electric appliances 37 are preferably supplied with the AC voltage produced by the inverter 32 via an electric switch board 36 (and cables, connector sockets, etc.)

The electric energy supply system 30 preferably further comprises accumulator charging electronics 38 and accumulator 39, whereby the produced electric energy may be stored for periods when the weather or time of the day does not allow for energy production. The accumulator 39 may also be used in case of emergency operation. Accordingly, emergency lighting, heating and ventilating and security appliances 40 are preferably connected to the accumulator 39, in order to ensure the electric current supply of these appliences 40 even when the solar cells 31 (and optionally the wind generator 35) is not producing electric energy and in absence of the external utility grid 33.

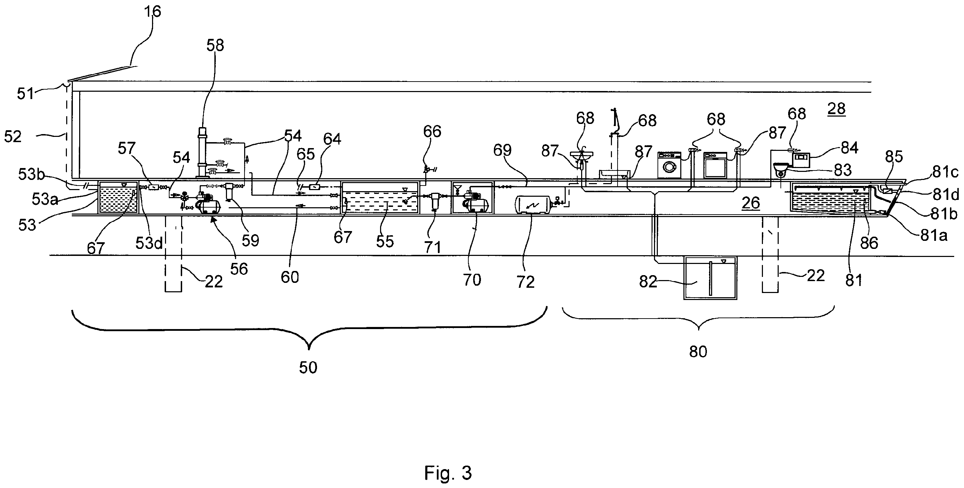

The potable water supply system 50 and the waste water treatment system 80 are shown in Figs. 3 to 5.

The potable water supply system 50 comprises a receptacle 51 (e.g. eaves gutter) for collecting rain water from the roof 16. The rainwater flows from the receptacle 51 through channel 52 (depicted with dashed line in Figs. 3 and 4) into an inlet 53a of a sedimentation tank 53 arranged in the engineering space 26. The sedimentation tank 53 is preferably provided with an overflow 53b and a sealable discharge opening 53c as well as an outlet 53d for transferring the rain water to other components of the system 50. The sedimentation tank 53 is connected to a clean water tank 55 via a duct 54. According to the present embodiment the clean water tank 55 consists of two tank portions 55a, 55b. One or more pumps 56 are provided for transporting the water from the sedimentation tank 53 to the clean water tank 55. A coarse filtration device 57 is disposed along the duct 54 downstream of the outlet 53d of the sedimentation tank 53, which coarse filtration device 57 filters coarse debris (e.g. tree branches, leaves, bird feather, etc.) from the water exiting the sedimentation tank 53, which debris would damage the devices arranged further downstream. For example a suitable coarse filtration device 57 is the device commercialised under the trade name "Big Blue", which has a filter house with removable filter liners. A sterile filtration device 58 (for example the compact water treatment device providing for sterile filtration and bearing the trade name Homespring, or other devices relying on reverse osmosis filtering technology) is connected to the duct 54 (preferably downstream of the pump 56) for producing sterile water from the rain water, which is preferably arranged in the residential space 28 in order to allow for easy maintenance. Further pre-filtering device 59 (for example pre-filter sold under the trade name Honeywell) may be provided upstream of the sterile filtration device 58 for carrying out further coarse filtration before the water enters the sterile filtration device 58, which pre-filtering device 59 is, however, preferably arranged in the engineering space 26 together with the other components of the system 50. Naturally, one or more of the various filters may be integrated in a single device; furthermore filters may be omitted as the case may be.

Preferably a second water circuit 60 is formed through the pump 56 and partially through the duct 54 in order to circulate the water stored in the clean water tank 55 (or its tank portions 55a, 55b) through the sterile filtration device 58 (and preferably through the pre-filtering device 59) continuously or from time to time by the pump 56. The second water circuit 60 is connected to the duct 54 for example through a cross valve 61.

The two tank portions 55a and 55b are preferably interconnected for example through one or more ducts 63 that are sealable and openable via valve 62, thus the same water level can be ensured in both tank portions 55a, 55b, while each tank portion 55a, 55b can be closed off independently from each other for maintenance purposes and can be drained through discharge openings 53c. A further advantage of employing two or more tank portions 55a, 55b is that the whole clean water tank 55 can be arranged more space economically between the elements of the metal supporting structure 12.

The tank portions 55a, 55b are preferably provided with ventilation ports 65 equipped with sterile filters 64, whereby only sterile air is introduced into the space above the sterile water. The tank portions 55a, 55b are preferably also provided with an unloading valve 66.

Preferably a fluid-level indicator 67 is arranged both in the sedimentation tank 53 and the clean water tank 55 (or its tank portions 55a, 55b) for indicating the water level therein.

The clean water tank 55 is connected to the mobile house's 10 water consumption outlets 68 via pipes 69 in which a second water pump 70 ensures appropriate water flow and pressure. Preferably, an active carbon filter 71 is arranged along the pipes 69 downstream of the pump 70 in order to neutralise any odour of the potable water. An electric water heater and container 72 is also connected to the pipes 69, which ensures hot water supply of the house 10.

The potable water supply system 50 may comprise further elements (such as valves, magnetic valves, cutoff cocks, distributing ducts, etc.) which are well known to a person skilled in the art and which are not discussed in more detail herein.

The waste water treatment system 80 comprises a blackwater tank 81 and a greywater tank 82 arranged in the engineering space 26. The blackwater tank 81 is connected to the water discharge of a toilet 83 and, as the case maybe, of a bidet 83' arranged in the residential space 28. The toilet 83 and bidet 83' are provided with built in pumps which use minimal amount of water or chemicals for flushing with a chemical solution from a flushing box 84. The blackwater tank 81 is preferably compatible with portable toilet discharge vehicles (for example discharge vehicles for portable toilets of Toi-toi trade name), whereby disposal of the blackwater can be simply ensured with known technologies. Accordingly, the depicted embodiment of the blackwater tank 81 comprises a blackwater discharge opening 81a, a damp pulverising pipe 81b and an air inlet 81c, which is open when the tank 81 is being emptied. Ventilation of the blackwater tank 81 is ensured by an exhaust duct 81d terminating above the level of the roof 16 and comprising active carbon filter 85. The blackwater tank 81 is preferably also provided with a fluid-level indicator 86. Naturally, other types of blackwater tanks 81 can also be envisaged, for examples ones that are compatible with conventional sniffing cars.

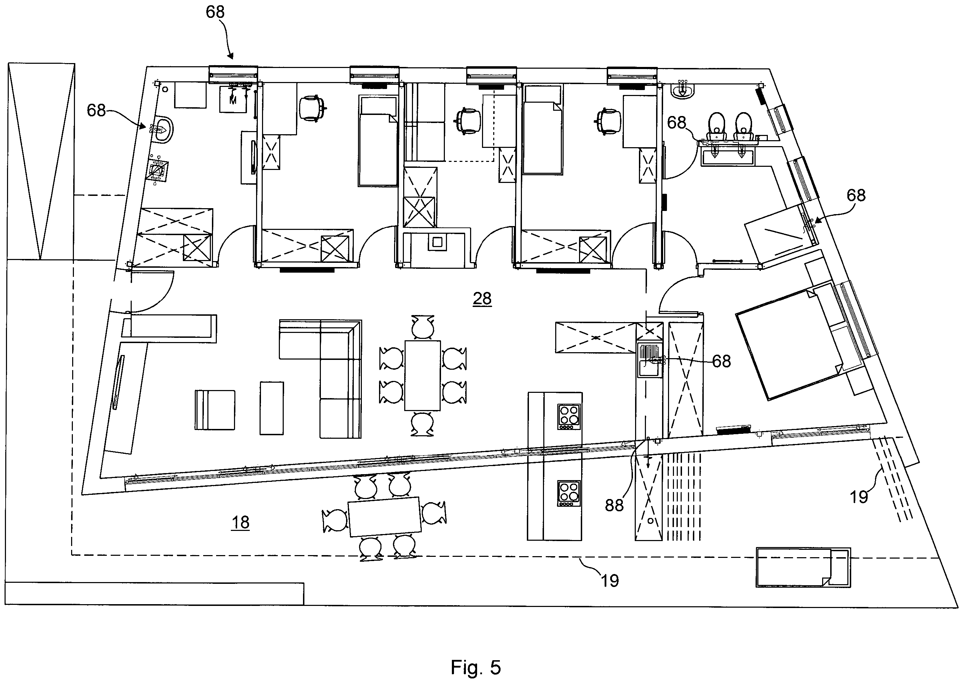

The greywater tank 82 is connected with the water discharges 87 of the other appliances using water. The greywater tank 82 is preferably equipped with an aeration device 88, which bubble aerates the greywater thereby helping to decompose the organic residues therein. The purified greywater is suitable for example for watering and for satisfying other water demands that do not require potable water quality, for which reason the greywater tank 82 is preferably connected with an outdoor frost-proof water consumption outlet 89 (see Fig. 5). The greywater tank 82 may be arranged within the engineering space 26 (see Fig. 4) or outside of it (see Fig. 3).

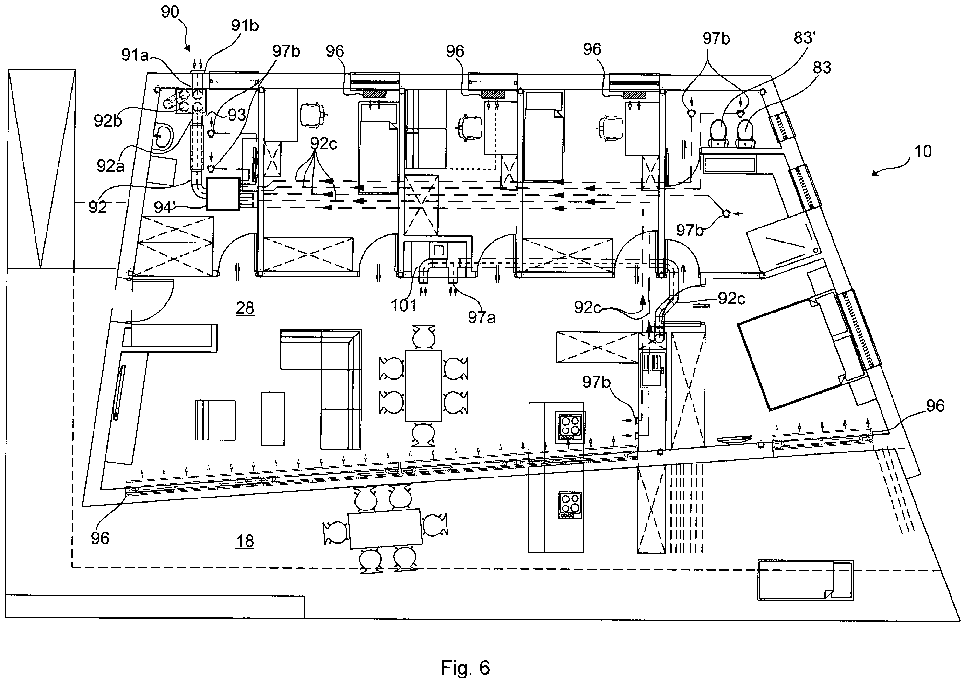

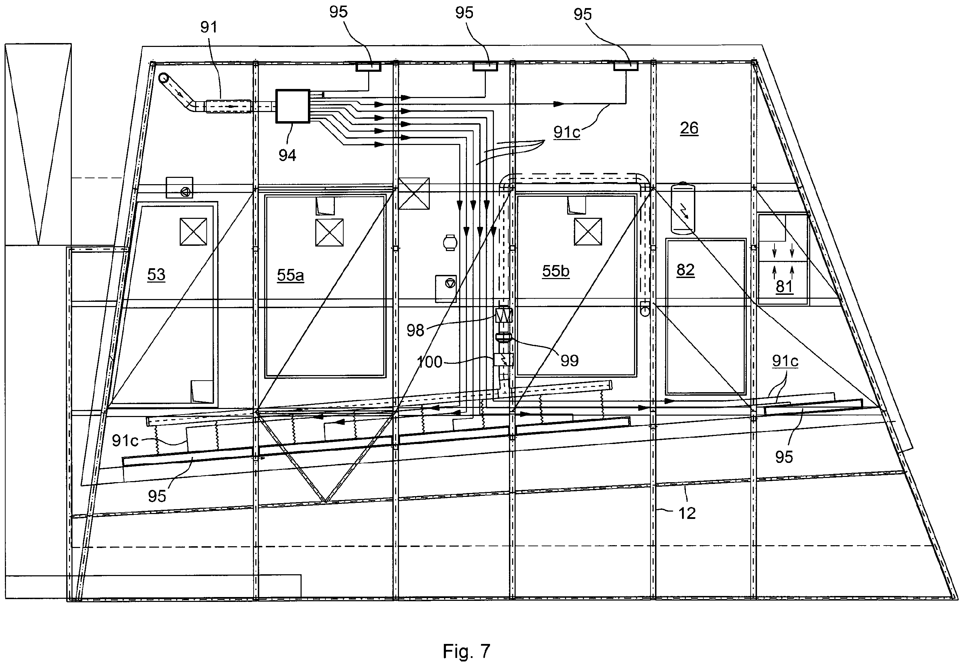

The ventilation and heating system illustrated in Figs 6 and 7 comprises a branched air diffusing inlet duct 91 (depicted with solid line with arrow) opening into the residential space 28 and a branched exhaust duct 92 (depicted with dashed line with arrow) opening from the residential space 28. An intake portion 91a of the inlet duct 91 leading into the house 10 and an exhaust portion 92a of the exhaust duct 92 exiting the house 10 are integrated into a heat exchanger 93 (e.g. WOLF CWK-400 heat exchanger) forming part of the system 90 in order to recover the waste heat. Inside the heat exchanger 93 the room temperature air entering via the exhaust duct 92 transfers waste heat to the fresh air sucked in from outdoor through the intake portion 91a of the inlet duct 91, whereby the fresh air is heated. In warmer weather the heat exchanger 93 works the opposite way: the colder air exiting through the exhaust portion 92a of the exhaust duct 92 cools the warmer air taken in from the outside.

The fresh air is preferably sucked in at the facade of the house 10, i.e. the intake portion 91a of the inlet air duct 91 is connected to an air intake vent 91b provided on one of the house's facades. The intake vent 91b is preferably provided with shutters against rain, bird guard and bug-screen (not shown). The exhaust air is preferably exhausted through the roof 16, i.e. the exhaust portion 92a of the exhaust duct 92 is connected to an exhaust vent 92b disposed in the roof 16, which is preferably provided with an air blower head, shutters against rain, bird guard and bug-screen.

The inlet duct 91 exiting the heat exchanger is preferably divided into branches 91c in an air division piece 94 arranged in the engineering space 26. According to the present embodiment depicted in Fig. 7, the branches 91c lead to air handling buffer spaces 95 built in the floor 28a of the residential space 28, which puffer spaced 95 open into the residential space 28 through floor grills 96. It should be appreciated that other arrangements for introducing the warmed or cooled fresh air are also conceivable.

The exhaust duct 92 terminating in the heat exchanger 93 is preferably connected to a second air division piece 94' arranged above the false ceiling 29 and there it is divided into branches 92c. According to the present embodiment and as can be seen in Fig. 6, the branches 92c run above the false ceiling 29 inside the upper engineering space 26b and the exhaust air is taken in from the residential space 28 through vents 97a formed in the false ceiling 29. Preferably air valves 97b are fixed in the false ceiling 29 above rooms with water supply and in the living room-kitchen and air aspiration is performed through the valves 97b. The exhaust duct 92 may also be provided with different arrangement.

The ventilation and heating system 90, as depicted in Fig. 7, preferably comprises further elements such as air filter 98, circulating fan 99, electric heater 100. A fireplace 101 may have separate ventilation, which is preferably one of the emergency appliances 40 that is connected to the accumulator 39 of the electric energy supply system 30, thus air ventilation and heating of the house 10 is ensured even in absence of electric energy production and in case of disturbance of the external utility grid 33. This is particularly important for passive houses where the air tight fitting of the doors and windows contribute to the heating. The house 10 may be equipped with active heating devices as well utilising renewable energy, such as the electric heater 100 or the fireplace 101 inside the residential space 28.

The floor plan of the residential space 28 is exemplary which can be modified by the skilled person as desired. The residential house is also only an example for the possible utilisation of the mobile house 10 according to the invention.

An advantage of the mobile house 10 is that it can be dismounted after installation, can be transported and reinstalled at a new location, thus the whole house 10 can be "moved" and not only the furnishing objects disposed therein. A further advantage of the house 10 is that it practically does not leave an ecological footprint after being dismounted and transported because it is only in contact with the environment through the ground screws 22. A further advantage is that the house 10 is self-supplying in the sense that the electric energy supply, the potable water supply, the waste water treatment and the heating all rely on renewable energy, meaning that there is no need for utility services, and can thus be installed anywhere.

Various modifications to the above disclosed embodiments will be apparent to a person skilled in the art without departing from the scope of protection determined by the attached claims.

## Claims

1. Mobile house utilising renewable energy, **characterised by** comprising:
- a shell structure (20) comprising a mountable and dismountable supporting structure (12) and panels (14) and roof (16) mounted thereon with releasable connections,
- ground screws (22) bearing the mobile house (10) and affixing the shell structure (20) to the ground and spacing the mobile house (10) from the ground, and
- electric energy supply system (30), potable water supply system (50) waste water treatment system (80), ventilation and heating system (90) utilising renewable energy and carried by the shell structure (20).

2. The mobile house according to claim 1, **characterised in that** the shell structure (20) comprises an engineering space (26) and a residential space (28) thereover or other space suitable for permanent stay and the electric energy supply system (30), potable water supply system (50) waste water treatment system (80), ventilation and heating system (90) are at least partially installed in the engineering space (26).

3. The mobile house according to claims 1 or 2, **characterised in that** the electric energy supply system (30) comprises a solar cell (31) mounted on the roof (16), an inverter (32) connected therewith and preferably a reversible consumption meter (34) connected to a utility grid (33) and preferably further comprises accumulator charging electrics (38) and an accumulator (39).

4. The mobile house according to claim 3, **characterised in that** a roof portion (16a) carrying the solar cell (31) is south-oriented and extends beyond a south-oriented facade panel (14) of the house (10) such that the facade panel (14) is protected from direct sunlight when the sunlight's angle of incidence with respect to the vertical is at its minimum during the year at the location where the mobile house (10) is installed; and the sunlight strikes the facade panel (14) when the angle of incidence with respect to the vertical is at its maximum during the year at the location where the mobile house (10) is installed, preferably direct sunlight strikes the facade panel (14) at least up to its half height, more preferably up to at least two thirds of its height.

5. The mobile house according to claim 3, **characterised in that** a roof portion (16a) carrying the solar cell (31) is oriented southwards and pitched at an angle (α) corresponding to an angle optimised for operation throughout the year.

6. The mobile house according to any of claims 1 to 5, **characterised in that** the potable water supply system (50) comprises a receptacle (51) for collecting rainwater from the roof (16), a sedimentation tank (53) arranged in the engineering space (26), a channel (52) connecting the receptacle (51) with the sedimentation tank (53), and further comprises a coarse filtration device (57) connected to an outlet (53d) of the sedimentation tank (53) for filtering out coarse impurities, and a sterile filtration device (58) arranged downstream of the coarse filtration device (57).

7. The mobile house according to claim 6, **characterised in that** the potable water supply system (50) comprises a clean water tank (55) arranged in the engineering space (26) downstream of the sterile filtration device (58) and preferably comprises an active carbon filter (71) arranged along a pipe (69) connecting the clean water tank (55) with water consumption outlets (68) of the mobile house (10).

8. The mobile house according to claim 7, **characterised in that** the clean water tank (55) comprises at least two tank portions (55a, 55b) which are interconnected with each other via a sealable and openable duct (63).

9. The mobile house according to any of claims 1 to 8, **characterised in that** the waste water treatment system (80) comprises a blackwater tank (81) and a greywater tank (82) arranged in the engineering space (26), which blackwater tank (81) is connected to a water discharge of a toilet (83) and optionally a bidet (83') arranged in a residential space (28), and which greywater tank (82) is connected to water discharges (87) of other water consuming appliances arranged in the residential space (28), and the greywater tank (82) is preferably connected to an aeration device (88) and preferably connected to an outdoor water consumption outlet (89)

10. The mobile house according to any of claims 1 to 9, **characterised in that** the ventilation and heating system (90) comprises an air inlet duct (91) opening into the residential space (28) and an exhaust duct (92) opening from the residential space (28) and a heat exchanger (93); and an intake portion (91a) of the inlet duct (91) leading into the house (10) and an exhaust portion (92a) of the exhaust duct (92) exiting the house (10) are traverse the heat exchanger (93); and preferably the intake portion (91a) of the inlet air duct (91) leading into the house (10) is connected to an air intake vent (91b) provided on one of the house's (10) facades; and preferably the exhaust portion (92a) of the exhaust duct (92) exiting the house (10) is connected to an exhaust vent (92b) provided on the roof (16).

## Patentansprüche

1. Mobilhaus, das erneuerbare Energie nutzt, **dadurch gekennzeichnet, dass** es umfasst:
- eine Schalenstruktur (20), die eine montierbare und demontierbare Stützstruktur (12) und Platten (14) und ein Dach (16) umfasst, das daran mit lösbaren Verbindungen befestigt ist,
- Bodenschrauben (22), die das Mobilhaus (10) tragen und die Schalenstruktur (20) an dem Boden befestigen und das mobile Haus (10) von dem Boden beabstanden, und
- elektrisches Energieversorgungssystem (30), Trinkwasserversorgungssystem (50), Abwasserbehandlungssystem (80), Lüftungs- und Heizsystem (90), das erneuerbare Energie nutzt und von der Schalenstruktur (20) getragen wird.

2. Mobilhaus nach Anspruch 1, **dadurch gekennzeichnet, dass** die Schalenstruktur (20) einen Technikraum (26) und einen darüber befindlichen Wohnraum (28) oder sonstigen für den dauerhaften Aufenthalt geeigneten Raum umfasst und dass das elektrische Energieversorgungssystem (30), das Trinkwasserversorgungssystem (50), das Abwasserbehandlungssystem (80), das Lüftungs- und Heizsystem (90) zumindest teilweise in dem Technikraum (26) installiert sind.

3. Mobilhaus nach Anspruch 1 oder 2, **dadurch gekennzeichnet, dass** das elektrische Energieversorgungssystem (30) eine auf dem Dach (16) montierte Solarzelle (31), einen damit verbundenen Wechselrichter (32) und vorzugsweise einen reversiblen Verbrauchsmesser (34), der mit einem Versorgungsnetz (33) verbunden ist und vorzugsweise weiter eine Speicherladeelektrik (38) und einen Akkumulator (39) umfasst.

4. Mobilhaus nach Anspruch 3, **dadurch gekennzeichnet, dass** ein die Solarzelle (31) tragender Dachabschnitt (16a) nach Süden orientiert ist und sich über eine nach Süden orientierte Fassadenplatte (14) des Hauses (10) hinaus erstreckt, so dass die Fassadenplatte (14) vor direkter Sonneneinstrahlung geschützt ist, wenn der Einfallswinkel des Sonnenlichts zur Vertikalen während des Jahres an der Stelle, wo das bewegliche Haus (10) installiert ist, minimal ist; und dass das Sonnenlicht auf die Fassadenplatte (14) trifft, wenn der Einfallswinkel bezüglich der Vertikalen während des Jahres an der Stelle, an der das Mobilhaus (10) installiert ist, an dem größten ist, wobei vorzugsweise direktes Sonnenlicht auf die Fassadenplatte (14) mindestens bis zu seiner halben Höhe, noch bevorzugter bis zu mindestens zwei Drittel seiner Höhe trifft.

5. Mobilhaus nach Anspruch 3, **dadurch gekennzeichnet, dass** ein Dachabschnitt (16a), der die Solarzelle (31) trägt, nach Süden orientiert ist und in einem Winkel (α) geneigt ist, der einem Winkel entspricht, der für den Betrieb während des ganzen Jahres optimiert ist.

6. Mobilhaus nach einem der Ansprüche 1 bis 5, **dadurch gekennzeichnet, dass** das Trinkwasserversorgungssystem (50) eine Aufnahme (51) zu dem Sammeln von Regenwasser von dem Dach (16), einen in dem Technikraum (26), angeordneten Absetzbehälter (53) einen Kanal (52), der den Behälter (51) mit dem Sedimentationstank (53) verbindet, und weiter eine Grobfiltereinrichtung (57), die mit einem Auslass (53d) des Sedimentationstanks (53) zu dem Herausfiltern von groben Verunreinigungen verbunden ist und eine der Grobfiltereinrichtung (57) nachgeschaltete Sterilfiltereinrichtung (58) umfasst.

7. Mobilhaus nach Anspruch 6, **dadurch gekennzeichnet, dass** das Trinkwasserversorgungssystem (50) einen in dem Technikraum (26) stromabwärts der Sterilfiltereinrichtung (58) angeordneten Reinwassertank (55) umfasst, der vorzugsweise einen Aktivkohlefilter (71) aufweist, der entlang einer Leitung (69) angeordnet ist, die den Reinwassertank (55) mit Wasserverbrauchsauslässen (68) des Mobilhauses (10) verbindet.

8. Mobilhaus nach Anspruch 7, **dadurch gekennzeichnet, dass** der Reinwassertank (55) mindestens zwei Tankabschnitte (55a, 55b) umfasst, die über einen verschließbaren und öffenbaren Kanal (63) miteinander verbunden sind.

9. Mobilhaus nach einem der Ansprüche 1 bis 8, **dadurch gekennzeichnet, dass** das Abwasserbehandlungssystem (80) einen Schwarzwassertank (81) und einen in dem Technikraum (26) angeordneten Grauwassertank (82) umfasst, wobei der Schwarzwassertank (81) an einen Wasserabfluss einer Toilette (83) und gegebenenfalls eines in einem Wohnraum (28) angeordneten Bidet (83') angeschlossen ist, und welcher Grauwassertank (82) an Wasserableitungen (87) anderer Wasserverbraucher in dem Wohnraum (28) angeordnete Vorrichtung angeschlossen ist, und der Grauwassertank (82) vorzugsweise mit einer Belüftungseinrichtung (88) verbunden und vorzugsweise mit einem Außenwasserverbrauchsauslass (89) verbunden ist.

10. Mobilhaus nach einem der Ansprüche 1 bis 9, **dadurch gekennzeichnet, dass** das Belüftungs- und Heizsystem (90) einen in den Wohnraum (28) mündenden Lufteinlasskanal (91) und einen von dem Wohnraum (28) ausgehenden Abluftkanal (92) und ein Wärmetauscher (93) umfasst; und wobei ein Einlassabschnitt (91a) des Einlasskanals (91), der in das Haus (10) führt, und ein Auslassabschnitt (92a) des Auslasskanals (92), der das Haus (10) verlässt, den Wärmetauscher (93) durchqueren; und wobei vorzugsweise der Einlassabschnitt (91a) des Einlassluftkanals (91), der in das Haus (10) führt, mit einer Lufteinlassöffnung (91b) verbunden ist, die an einer der Fassaden des Hauses (10) vorgesehen ist; und wobei vorzugsweise der Auslassabschnitt (92a) des Auslassrohrs (92), der aus dem Haus (10) austritt, mit einer Auslassöffnung (92b) verbunden ist, die auf dem Dach (16) vorgesehen ist.

## Revendications

1. Maison mobile utilisant de l'énergie renouvelable, **caractérisée en ce qu'**elle comprend :
- une structure de coque (20) comprenant une structure de support apte à être montée et démontée (12) et des panneaux (14) et un toit (16) montés sur celle-ci au moyen de raccords libérables,
- des vis de fixation au sol (22) supportant la maison mobile (10) et fixant la structure de coque (20) au sol et espaçant la maison mobile (10) du sol, et
- un système d'alimentation en énergie électrique (30), un système d'alimentation en eau potable (50), un système de traitement des eaux usées (80), un système de ventilation et de chauffage (90) utilisant de l'énergie renouvelable et supportés par la structure de coque (20).

2. Maison mobile selon la revendication 1, **caractérisée en ce que** la structure de coque (20) comprend un espace technique (26) et un espace résidentiel (28) au-dessus de celui-ci ou un autre espace approprié pour une habitation permanente et le système d'alimentation en énergie électrique (30), le système d'alimentation en eau potable (50), le système de traitement des eaux usées (80), le système de ventilation et de chauffage (90) sont au moins partiellement installés dans l'espace technique (26).

3. Maison mobile selon la revendication 1 ou 2, **caractérisée en ce que** le système d'alimentation en énergie électrique (30) comprend une cellule solaire (31) montée sur le toit (16), un onduleur (32) raccordé à celle-ci et de préférence un compteur de consommation réversible (34) raccordé à un réseau d'électricité (33) et de préférence comprend en outre des installations électriques de charge d'accumulateur (38) et un accumulateur (39).

4. Maison mobile selon la revendication 3, **caractérisée en ce qu'**une partie de toit (16a) supportant la cellule solaire (31) est orientée sud et s'étend au-delà d'un panneau de façade orienté sud (14) de la maison (10) de telle sorte que le panneau de façade (14) est protégé de la lumière du soleil directe lorsque l'angle d'incidence de la lumière du soleil par rapport à la verticale est à son minimum de l'année à l'emplacement dans lequel la maison mobile (10) est installée; et la lumière du soleil heurte le panneau de façade (14) lorsque l'angle d'incidence par rapport à la verticale est à son maximum de l'année à l'emplacement dans lequel la maison mobile (10) est installée, de préférence la lumière du soleil directe heurte le panneau de façade (14) au moins à sa mi-hauteur, de manière davantage préférée au moins aux deux tiers de sa hauteur.

5. Maison mobile selon la revendication 3, **caractérisée en ce qu'**une partie de toit (16a) supportant la cellule solaire (31) est orientée vers le sud et inclinée à un angle (α) correspondant à un angle optimisé pour le fonctionnement sur toute l'année.

6. Maison mobile selon l'une quelconque des revendications 1 à 5, **caractérisée en ce que** le système d'alimentation en eau potable (50) comprend un réceptacle (51) pour collecter de l'eau de pluie à partir du toit (16), une cuve de sédimentation (53) agencée dans l'espace technique (26), un canal (52) raccordant le réceptacle (51) à la cuve de sédimentation (53), et comprend en outre un dispositif de filtration grossière (57) raccordé à une sortie (53d) de la cuve de sédimentation (53) pour filtrer les impuretés grossières, et un dispositif de filtration stérile (58) agencé en aval du dispositif de filtration grossière (57).

7. Maison mobile selon la revendication 6, **caractérisée en ce que** le système d'alimentation en eau potable (50) comprend une cuve d'eau propre (55) agencée dans l'espace technique (26) en aval du dispositif de filtration stérile (58) et comprend de préférence un filtre à charbon actif (71) agencé le long d'un tuyau (69) raccordant la cuve d'eau propre (55) avec des sorties de consommation d'eau (68) de la maison mobile (10).

8. Maison mobile selon la revendication 7, **caractérisée en ce que** la cuve d'eau propre (55) comprend au moins deux parties de cuve (55a, 55b) qui sont raccordées entre elles par l'intermédiaire d'un conduit pouvant être scellé et ouvert (63).

9. Maison mobile selon l'une quelconque des revendications 1 à 8, **caractérisée en ce que** le système de traitement des eaux usées (80) comprend une cuve d'eaux noires (81) et une cuve d'eaux grises (82) agencées dans l'espace technique (26), laquelle cuve d'eaux noires (81) est raccordée à une sortie d'évacuation d'eau d'une toilette (83) et optionnellement d'un bidet (83') agencés dans l'espace résidentiel (28), et laquelle cuve d'eaux grises (82) est raccordée à des sorties d'évacuation d'eau (87) d'autres installations consommant de l'eau agencées dans l'espace résidentiel (28), et la cuve d'eaux grises (82) est de préférence raccordée à un dispositif d'aération (88) et de préférence raccordée à une sortie de consommation d'eau extérieure (89).

10. Maison mobile selon l'une quelconque des revendications 1 à 9, **caractérisée en ce que** le système de ventilation et de chauffage (90) comprend un conduit d'air d'admission (91) donnant sur l'espace résidentiel (28) et un conduit d'évacuation (92) issu de l'espace résidentiel (28) et un échangeur de chaleur (93); et une partie d'admission (91a) du conduit d'admission (91) menant vers la maison (10) et une partie d'évacuation (92a) du conduit d'évacuation (92) quittant la maison (10) sont transversales à l'échangeur de chaleur (93) ; et, de préférence, la partie d'admission (91a) du conduit d'air d'admission (91) menant vers la maison (10) est raccordée à un évent d'admission d'air (91b) disposé sur l'une des façades de la maison (10) ; et, de préférence, la partie d'évacuation (92a) du conduit d'évacuation (92) quittant la maison (10) est raccordée à un évent d'évacuation (92b) disposé sur le toit (16).
